# EUROPEAN PATENT APPLICATION

(11) **EP 4 357 317 A1**
(43) Date of publication of application: **24.04.2024**
(21) Application number: 22861093.7
(22) Date of filing: 03.08.2022
(51) Int. Cl.: C04B 35/043, B09B 3/30, B09B 3/40

(54) **RECYCLING METHOD FOR MAGNESIA CARBON BRICKS**

(30) Priority: 27.08.2021 JP 2021138840
(71) Applicant: JFE Steel Corporation, Tokyo 100-0011 (JP)
(72) Inventor: NAKAMURA, Yoshiyuki, Tokyo 100-0011 (JP)
(74) Representative: Grünecker Patent- und Rechtsanwälte PartG mbB
(86) International application number: PCT/JP2022/029760
(87) International publication number: WO 2023/026802

(57) **Abstract**

The corrosion resistance of a refractory made of a used magnesia carbon brick is improved when the used magnesia carbon brick is reused as a refractory raw material. Provided is a method for recycling a magnesia carbon brick, the method including bringing a used magnesia carbon brick containing an aluminum-containing substance into contact with water, followed by subjecting the used magnesia carbon brick to a dehydration treatment and pulverizing the used magnesia carbon brick subjected to the dehydration treatment for reusing as a refractory raw material.

## Description

### TECHNICAL FIELD

The present invention relates to a method for recycling a magnesia carbon brick.

### BACKGROUND ART

Conventionally, refractories such as magnesia carbon bricks have been reused (Patent Literatures 1 to 4).

Main raw materials for magnesia carbon bricks are magnesia (magnesium oxide) and graphite. In particular, high-grade raw materials are used for the magnesia carbon bricks used in a converter, and for example, a combination of a large particle size product of high purity electro-fused magnesia and high purity graphite is used.

The magnesia carbon bricks (used magnesia carbon bricks) that have been used in the converter or the like for a certain period of time are usually disassembled in a state where the magnesia carbon bricks still have a certain thickness remining, thus magnesia and graphite remain in a good state, and the magnesia carbon bricks have a high value as a raw material.

Therefore, if the used magnesia carbon bricks can be reused as the raw material of the refractory (for example, magnesia carbon brick), the bricks have great economic and environmental advantages.

### CITATION LIST

### PATENT LITERATURE

Patent Literature 1: JP 2010-12403 A
Patent Literature 2: JP 2014-51428 A
Patent Literature 3: JP 2004-149330 A
Patent Literature 4: JP H10-7453 A

### SUMMARY OF INVENTION

### TECHNICAL PROBLEMS

A small amount of metallic aluminum may be added as an antioxidant for graphite to the magnesia carbon bricks (hereinafter, also simply referred to as "brick").

Part of the added metallic aluminum is heated in the brick to be changed to and thus present as aluminum carbide and/or aluminum nitride (hereinafter, also referred to as "aluminum carbide or the like").

Aluminum carbide or the like is unstable and easily hydrated, and easily changes to aluminum hydroxide by reacting with moisture in the air even at room temperature. This change involves large volume expansion (about 2 times).

For this reason, when the used brick is reused as a brick raw material, cracking may occur in the brick after molding or shipment.

Thus, a method in which the used brick is brought into contact with water (for example, the brick is immersed in water for a certain period of time) to hydrate aluminum carbide or the like before being made into a raw material may be adoptable.

However, aluminum hydroxide resulting from contact with water is heated in the brick during use to change to stable alumina (aluminum oxide). This change involves volume shrinkage, so that voids may be formed in the brick, resulting in degradation in the corrosion resistance of the brick.

The present invention has been made in view of the above points, and an object of the present invention is to improve the corrosion resistance of a refractory made of a used magnesia carbon brick when the used magnesia carbon brick is reused as a refractory raw material.

### SOLUTION TO PROBLEMS

As a result of intensive studies, the present inventors have found that the above object is achieved by adopting the following configuration, and have completed the present invention.

That is, the present invention provides the following [1] to [5].
[1] A method for recycling a magnesia carbon brick, the method comprising: bringing a used magnesia carbon brick containing an aluminum-containing substance into contact with water, followed by subjecting the used magnesia carbon brick to a dehydration treatment; and pulverizing the used magnesia carbon brick subjected to the dehydration treatment for reusing as a refractory raw material.
[2] The method for recycling a magnesia carbon brick according to [1], wherein a temperature of the water brought into contact with the used magnesia carbon brick is 150°C or lower.
[3] The method for recycling a magnesia carbon brick according to [1] or [2], wherein the dehydration treatment is a heat treatment.
[4] The method for recycling a magnesia carbon brick according to [3], wherein a temperature of the heat treatment is 160°C or higher.
[5] The method for recycling a magnesia carbon brick according to [3], wherein a temperature of the heat treatment is 320°C or higher.

### ADVANTAGEOUS EFFECTS OF INVENTION

The present invention can improve the corrosion resistance of a refractory made of a used magnesia carbon brick when the used magnesia carbon brick is reused as a refractory raw material.

### DESCRIPTION OF EMBODIMENTS

### [Method for Recycling Magnesia Carbon Brick]

A method for recycling a magnesia carbon brick of the present invention (hereinafter, also simply referred to as "recycling method of the present invention") includes the steps of: bringing a used magnesia carbon brick containing an aluminum-containing substance into contact with water, followed by subjecting the used magnesia carbon brick to a dehydration treatment; and pulverizing the used magnesia carbon brick subjected to the dehydration treatment for reusing as a refractory raw material.

In the recycling method of the present invention, first, aluminum carbide or the like contained in the used brick changes to aluminum hydroxide through contact with water.

Next, the aluminum hydroxide changes to alumina through the dehydration treatment. This causes volume shrinkage in the used brick.

The used brick that has undergone volume shrinkage is then pulverized. The obtained pulverized product is reused as the refractory raw material.

Here, the obtained pulverized product has already undergone volume shrinkage. Therefore, when the obtained pulverized product is used as the refractory raw material, the generation of voids due to the volume shrinkage in the refractory is suppressed, and the refractory has good corrosion resistance.

Furthermore, the refractory using the obtained pulverized product (used brick pulverized product) as the raw material can have good corrosion resistance, and therefore an effect of increasing the ratio of the used brick pulverized product to the refractory raw material (the blending ratio of the used brick pulverized product in the refractory raw material) can also be expected.

### <Used Magnesia Carbon Brick>

The used magnesia carbon brick (used brick) is, for example, a magnesia carbon brick that have been used as a lining refractory for a certain period of time in steelmaking equipment such as a converter, a ladle, or a vacuum degassing furnace (RH).

The magnesia carbon brick is produced by a conventionally known method using a raw material containing magnesia and carbon and containing an antioxidant for carbon.

Examples of the antioxidant for carbon include metallic aluminum, and an alloy of aluminum and magnesium (aluminum alloy), and metallic aluminum is preferable.

The content of the antioxidant (for example, metallic aluminum) in the raw material of the magnesia carbon brick is, for example, 6 mass% or less, preferably 4 mass% or less, and more preferably 2 mass% or less. The lower limit of the content is not particularly limited, and is, for example, 0.5 mass%, and preferably 1 mass%.

The content of other components (chemical composition) in the raw material of the magnesia carbon brick is not particularly limited, and a conventionally known chemical composition can be adopted.

For example, the carbon content is preferably 1 mass% or more, and more preferably 5 mass% or more. Meanwhile, the content is preferably 30 mass% or less, and more preferably 25 mass% or less.

The magnesia content is, for example, an amount excluding the content of components other than magnesium (such as carbon and an antioxidant).

The used magnesia carbon brick contains an aluminum-containing substance.

As described above, metallic aluminum may be used as a raw material, and part of the metallic aluminum changes to aluminum carbide and/or aluminum nitride (aluminum carbide or the like) by receiving heat during use in a converter or the like.

Therefore, a specific example of the aluminum-containing substance is aluminum carbide or the like. That is, the aluminum-containing substance preferably contains at least aluminum carbide or the like.

The aluminum-containing substance may contain, in addition to aluminum carbide, metallic aluminum; an aluminum alloy; aluminum hydroxide; aluminum oxide and the like.

### <Contact with Water>

A method for bringing the used brick into contact with water is not particularly limited, and examples thereof include methods such as immersion in water, steam exposure, and spray coating, and any of these methods is suitably used.

The used brick may be coarsely crushed, followed by bringing the resulting coarsely crushed product into contact with water.

The particle size of the coarsely crushed product is not particularly limited, and is preferably 60 mm or less, and more preferably 50 mm or less.

An apparatus used for coarsely crushing is not particularly limited, and a conventionally known crushing apparatus is used.

The coarsely crushed product may be subjected to magnetic separation to remove Fe, and then brought into contact with water.

The state of the water (hereinafter, also referred to as "contact water") to be brought into contact with the used brick may be either liquid or gas, or a mixture of liquid and gas.

If the temperature of the contact water is too high, collapse of magnesia contained in the used brick may be caused by hydration. In this case, reuse of the used brick as the refractory raw material becomes difficult. Therefore, the temperature of the contact water is preferably 170°C or lower, more preferably 150°C or lower, still more preferably 120°C or lower, and particularly preferably 90°C or lower.

The lower limit of the temperature of the contact water is not particularly limited, and is, for example, 5°C.

A time during which the used brick and the contact water are brought into contact with each other (hereinafter, also referred to as "contact time") is preferably 0.5 hours or longer, more preferably 1.5 hours or longer, and still more preferably 2.5 hours or longer because aluminum carbide or the like is easily hydrated.

Meanwhile, the upper limit of the contact time is not particularly limited. However, even if the contact time is too long, the effect of hydrating aluminum carbide or the like is saturated. Therefore, the contact time is, for example, 180 hours or less, preferably 100 hours or less, more preferably 50 hours or less, and still more preferably 20 hours or less.

### <Dehydration Treatment>

As a method of the dehydration treatment, a treatment (heat treatment) of heating the used brick after being brought into contact with water is preferable from the viewpoint of cost and the like.

A heating temperature (the temperature of the used brick during the heat treatment) is, for example, 160°C or higher, preferably 200°C or higher, more preferably 240°C or higher, still more preferably 280°C or higher, and particularly preferably 320°C or higher, which is the decomposition temperature of aluminum hydroxide (gibbsite).

Meanwhile, when the heating temperature is too high, carbon contained in the used brick is easily oxidized. From the viewpoint of suppressing this oxidation, the heating temperature is preferably 600°C or lower, more preferably 500°C or lower, and still more preferably 400°C or lower.

A heating time (time for performing the heat treatment to the used brick) is preferably 0.5 hours or more, more preferably 1 hour or more, and still more preferably 2 hours or more.

Meanwhile, the upper limit of the heating time is not particularly limited. However, if the heating time is too long, the effect of the heat treatment is saturated. Therefore, the heating time is preferably 10 hours or less, more preferably 8 hours or less, and still more preferably 5 hours or less.

Examples of a heating atmosphere (the atmosphere of the used brick during the heat treatment) include an oxidizing atmosphere such as an air atmosphere; and a non-oxidizing atmosphere such as a nitrogen atmosphere or an argon atmosphere.

A non-oxidizing atmosphere is preferable because oxidation of carbon contained in the used brick is easily suppressed.

For example, when the heating temperature is 550°C (the dehydration temperature of boehmite at which dehydration of boehmite is said to be generated from part of gibbsite during dehydration), the heating atmosphere is preferably a non-oxidizing atmosphere such as an argon atmosphere in order to avoid the influence of oxidation.

Drying may be performed at a temperature lower than the above-mentioned heating temperature before the used brick having been brought into contact with water is subjected to the heat treatment.

A drying time is not particularly limited, and is, for example, 12 to 36 hours.

### <Pulverization>

The used brick subjected to the dehydration treatment is pulverized to obtain a pulverized product.

The particle size of the pulverized product is, for example, a particle size suitable as the refractory raw material, and is preferably 10 mm or less, and more preferably 5 mm or less. However, the present invention is not limited thereto.

An apparatus used for pulverizing is not particularly limited, and a conventionally known pulverizing apparatus is used.

The obtained pulverized product is reused as the refractory raw material. In the reuse, as described above, the generation of voids in the refractory is suppressed and the refractory has good corrosion resistance.

### EXAMPLES

Hereinafter, the present invention will be specifically described with reference to Examples.
However, the present invention is not limited to Examples described below.

### <Recovery of Used Bricks>

Two types of used magnesia carbon bricks (used bricks) were recovered from an actual converter. Specifically, used bricks having a metallic aluminum content (simply described as "metallic Al content" in the following Table 1) of 1.5 mass% in a raw material at the time of production and used bricks having the same content of 3.0 mass% were sorted and recovered.

The recovered used bricks were used after removing surface deposits.

### <Production of Fresh Brick>

Apart from the recovered used bricks, a fresh brick was produced.

Specifically, the fresh magnesia carbon brick was produced using a raw material containing electro-fused magnesia (78.5 mass%), graphite (20 mass%), and metallic aluminum (1.5 mass%).

### <Preparation of Sample>

Samples were prepared by blending the recovered used bricks (30 mass%) into the produced fresh brick (70 mass%).

However, in Standard Example 1, the used brick was not blended, and only the produced fresh brick (100 mass%) was used as a sample.

### <Contact with Water>

The prepared sample was roughly crushed to have a maximum particle size of 40 mm using a jaw crusher.

Thereafter, the coarsely crushed sample was brought into contact with contact water under the conditions shown in the following Table 1 (contact water temperature [°C] and contact time [Hr]). When the contact with the contact water was not performed, "-" was described in the following Table 1.

When the temperature of the contact water was 100°C or lower, the sample was immersed in the contact water. Meanwhile, when the temperature of the contact water was higher than 100°C, an autoclave was used.

### <Dehydration Treatment>

The sample was then placed in a dryer and dried at 120°C for 24 hours.

Thereafter, the sample was subjected to a dehydration treatment (heat treatment) under the conditions shown in the following Table 1 (heating temperature [°C], heating time [Hr] and heating atmosphere). When the dehydration treatment was not performed, "-" was described in the following Table 1.

### <Pulverization>

The sample was then pulverized to have a maximum particle size of 5 mm using a jaw crusher and a disc mill.

### <Evaluation of Corrosion Resistance>

First, a brick was prepared using the pulverized sample.

Specifically, a composition obtained by blending 2.0 parts by mass of a binder (phenol resin) into 100 parts by mass of the pulverized sample was kneaded, and then vacuum press molding was performed at a pressure of 150 MPa to obtain a molded body. The obtained molded body was subjected to a heat treatment at 250 °C for 24 hours to prepare the brick.

In each example, five bricks were prepared.

A set of prepared five bricks was subjected to a rotating drum test at 1700°C for 5 hours to evaluate corrosion resistance to slag. As the slag, use was made of synthetic slag having a mass ratio (C/S) of CaO to SiO₂ of 3.0 and a value (T.Fe) of 14 mass% obtained by converting the content of iron oxide in the slag into Fe.

After the test, the amount of change in the thickness of the brick was determined. The average value of the amounts of change of the five bricks was taken as the amount of change of each example. A value obtained by normalizing the amount of change of each example with the amount of change of Standard Example 1 was obtained as a corrosion resistance index. It can be evaluated that as the corrosion resistance index is smaller (closer to 100), the corrosion resistance is more excellent. The results are shown in the following Table 1.

### [Table 1]

**Table 1**

| | Used brick | | Contact with | | Dehydration treatment | | | Corrosion resistance index |
|---|---|---|---|---|---|---|---|---|
| | Metallic Al content [mass%] | Amount blended in sample [mass%] | Temperature of contact water [°C] | Contact time [Hr] | Heating temperature [°C] | Heating time [Hr] | Heating atmosphere | |
| Standard Example 1 | - | 0 | - | - | - | - | - | 100 |
| Comparative Example 1 | 1.5 | 30 | - | - | - | - | - | 138 |
| Comparative Example 2 | 1.5 | 30 | 80 | 3 | - | - | - | 125 |
| Invention Example 1 | 1.5 | 30 | 80 | 3 | 220 | 3 | Air | 116 |
| Invention Example 2 | 1.5 | 30 | 80 | 3 | 320 | 3 | Air | 105 |
| Invention Example 3 | 1.5 | 30 | 80 | 3 | 320 | 1 | Air | 107 |
| Invention Example 4 | 1.5 | 30 | 80 | 3 | 550 | 3 | Argon | 104 |
| Comparative Example 3 | 1.5 | 30 | 100 | 3 | - | - | - | 124 |
| Invention Example 5 | 1.5 | 30 | 100 | 3 | 320 | 3 | Air | 106 |
| Comparative Example 4 | 1.5 | 30 | 150 | 3 | - | - | - | 122 |
| Invention Example 6 | 1.5 | 30 | 150 | 3 | 320 | 3 | Air | 108 |
| Comparative Example 5 | 1.5 | 30 | 20 | 168 | - | - | - | 126 |
| Invention Example 7 | 1.5 | 30 | 20 | 168 | 320 | 3 | Air | 103 |
| Invention Example 8 | 1.5 | 30 | 5 | 168 | 320 | 3 | Air | 106 |
| Comparative Example 6 | 3.0 | 30 | - | - | - | - | - | - |
| Comparative Example 7 | 3.0 | 30 | 80 | 3 | - | - | - | 122 |
| Invention Example 9 | 3.0 | 30 | 80 | 3 | 320 | 3 | Air | 119 |

### <Summary of Evaluation Results>

The following was found from the results shown in Table 1 above.

### <<Comparative Examples 1 and 2 and Invention Examples 1 to 4>>

Comparative Example 1 and Comparative Example 2 in which the dehydration treatment was not performed respectively had corrosion resistance indexes (hereinafter, also simply referred to as "index") of 138 and 125, and corrosion resistance significantly deteriorated as compared with Standard Example 1.

Meanwhile, Invention Examples 1 to 4 in which the dehydration treatment was performed had indexes decreased to 116 or less, which had good corrosion resistance.

Comparison between Invention Example 1 and Invention Example 2 showed that Invention Example 2 having a higher heating temperature had a smaller index, which had good corrosion resistance.

Comparison between Invention Example 2 and Invention Example 3 showed that Invention Example 2 having a longer heating time had a smaller index, which had good corrosion resistance.

Comparison between Invention Example 2 and Invention Example 4 showed that both Invention Example 2 and Invention Example 4 had equivalent indexes. From this, it was found that sufficient corrosion resistance is obtained without increasing the heating temperature to the dehydration temperature (550°C) of boehmite.

### <<Comparative Example 3 and Invention Example 5>>

As compared with Comparative Example 3 in which the dehydration treatment was not performed, Invention Example 5 in which the dehydration treatment was performed had a decreased index, which had good corrosion resistance.

### <<Comparative Example 4 and Invention Example 6>>

As compared with Comparative Example 4 in which the dehydration treatment was not performed, Invention Example 6 in which the dehydration treatment was performed had a decreased index, which had good corrosion resistance.

### <<Comparative Example 5 and Invention Examples 7 and 8>>

As compared with Comparative Example 5 in which the dehydration treatment was not performed, Invention Examples 7 and 8 in which the dehydration treatment was performed had a decreased index, which had good corrosion resistance.

### <<Comparative Examples 6 and 7 and Invention Example 9>>

In Comparative Example 6, the rotary drum test could not be performed because all the prepared bricks were cracked and collapsed, but when contact with water was performed (Comparative Example 7), generation of cracking was suppressed, and the test could be performed.

As compared with Comparative Example 7 in which the dehydration treatment was not performed, Invention Example 9 in which the dehydration treatment was performed had a decreased index, which had good corrosion resistance.

## Claims

1. A method for recycling a magnesia carbon brick, the method comprising:
bringing a used magnesia carbon brick containing an aluminum-containing substance into contact with water, followed by subjecting the used magnesia carbon brick to a dehydration treatment; and
pulverizing the used magnesia carbon brick subjected to the dehydration treatment for reusing as a refractory raw material.

2. The method for recycling a magnesia carbon brick according to claim 1, wherein a temperature of the water brought into contact with the used magnesia carbon brick is 150°C or lower.

3. The method for recycling a magnesia carbon brick according to claim 1 or 2, wherein the dehydration treatment is a heat treatment.

4. The method for recycling a magnesia carbon brick according to claim 3, wherein a temperature of the heat treatment is 160°C or higher.

5. The method for recycling a magnesia carbon brick according to claim 3, wherein a temperature of the heat treatment is 320°C or higher.
